# EUROPEAN PATENT APPLICATION

(11) **EP 4 481 573 A1**
(43) Date of publication of application: **25.12.2024**
(21) Application number: 23180345.3
(22) Date of filing: 20.06.2023
(51) Int. Cl.: G06F 12/02, G06F 12/0813, G06F 16/13

(54) **COMPUTING DEVICE WITH DISTRIBUTED OBJECT STORAGE**

(71) Applicant: IMEC VZW, 3001 Leuven (BE)
(72) Inventor: VERACHTERT, Wilfried, 3140 Keerbergen (BE); NACKAERTS, Axel, 3053 Haasrode (BE); MEJDRICH, Eric Oliver, 3001 Heverlee (BE)
(74) Representative: Winger

(57) **Abstract**

A compute node (400) for a computer, a computer (600) with a distributed store as main memory assembled from the compute nodes, and a memory access method (800) for such computers are disclosed. The compute node (400) comprises at least one compute core (410) operating on information organized and stored in memory objects (10). Memory objects are subdivided into fragments (12) which are referenceable by the at least one compute core. A memory object management unit (420) of the compute node operatively couples the at least one compute core (410) to the distributed store to access fragments (12) from respective memory locations in the distributed store, which are accessible through corresponding physical addresses. The memory object management unit (420) is configured to calculate the physical addresses as a function of the fragment's offset in a logical address space (11) associated with and a unique identifier (OID) assigned to the memory object containing referenced fragments.

## Description

### Field of the invention

The present invention relates to the field of memory management in computer architectures for high performance computing (HPC) and supercomputers.

### Background of the invention

The very large number of compute cores that are interconnected in present-day super computers causes a substantial amount of communication overhead. Coherency of shared fast memory structures such as shared cache in multicore computer architectures and synchronization of large, distributed databases that manage distributed memory resources of supercomputers require massive amounts of computer resources which are not available for useful computations. This has created a performance bottleneck on many of the world's most advanced hyperscale computers.

Moreover, building a machine (supercomputer) as a cluster or clusters of compute nodes, the machine may present itself to the programmer either as a single system-image or as a pool of independent but interconnected nodes. When presented as a single system-image, the programmer is not aware of the distinction between the physical nodes, which is why the behavior of the nodes must be consistent irrespective of their location. This introduces the problem of global synchronization: information accessed by multiple processes must always be consistent, which is very difficult to obtain given the physically distributed nature of a cluster. When presented as a pool of independent but interconnected nodes, the programmer must take care of data movement and synchronization between the physical nodes. Both approaches lead to a very large messaging overhead and complex programming. In a supercomputing setting (HPC), up to 97% of the time is used to synchronize and transfer data vs compute on the data.

Specialized file systems such as "Lustre" have been developed to further increase the speed of memory access in supercomputers, thereby reducing the speed gap between memory and compute cores. However, memory content managed by file systems is inherently slow to access due to the multiple indirections taken.

In Abrahamse et al., "Memory-Disaggregated In-Memory Object Store Framework for Big Data Applications", Proceedings of the 2022 IEEE International Parallel and Distributed Processing Symposium Workshops (IPDPSW), ed. L. O'Conner, Piscataway: IEEE , 2022, pp. 1228-1234, the use of ThymesisFlow - a software-defined interconnect stack for rack-scale memory disaggregation - has been suggested in the framework of a memory disaggregated in-memory object store to overcome local memory restrictions in distributed computing environments. The solution proposed by the authors is a software solution that is built on top of existing hardware, hence only hides but does not fundamentally solve the underlying problems regarding caching and addressing.

### Summary of the invention

It is an object of embodiments of the present invention to overcome the above-mentioned disadvantages of the prior art.

The above objective is accomplished by a device and method according to the present invention.

In one aspect, the present invention relates to a compute node that is suitable for replication and assembly into a multi-node multiprocessing computer, like a supercomputer, which computer comprises a distributed store as physical main memory. The compute node comprises at least one compute core for performing compute processes on information organized into and stored as memory objects, and is configured to reference this information as collections of one or more fragments that are contained within the memory objects. Different fragments of each memory object have different offsets in a logical address space that is associated with the memory object. Moreover, each memory object is assigned a unique identifier. The compute node further comprises a memory object management unit which operatively couples the at least one compute core to the distributed store to access memory object fragments from respective memory locations in the distributed store. Each memory location in the distributed store is accessible through a corresponding physical address. The memory object management unit is configured to calculate the physical address corresponding to the memory location in the distributed store of each fragment referenced by the at least one compute core as a function of the fragment's offset in the logical address space associated with the memory object containing said fragment and the unique identifier assigned to the memory object containing said fragment.

In another aspect, the present invention relates to a memory access method for a multi-node multiprocessing computer which comprises a distributed store as computer main memory. The method includes the steps of:
organizing information which is accessible in the distributed store into memory objects as the underlying storage format;
assigning a unique identifier to each memory object and subdividing each memory object into a plurality of fragments, such that different fragments of the memory object have different offsets in a logical address space associated with the memory object, whereby the information accessible in the distributed store corresponds to fragments of memory objects;
determining the unique identifiers of the memory objects respectively containing fragments referenced by one or multiple compute cores of the computer;
determining the respective offsets for the fragments referenced by said one or multiple compute cores;
calculating, for each fragment referenced by said one or multiple compute cores, the physical address of a memory location in the distributed store as a function of the fragment offset and the unique identifier of the memory object corresponding to that fragment;
accessing the fragments referenced by said one or multiple compute cores from the respective memory locations in the distributed store through the corresponding physical addresses.

It is an advantage of embodiments of the invention that information can be organized and stored as objects on a distributed store as the computer main memory. Information can be advantageously stored in object fragments which can be distributed uniformly over the individual store units that compose the distributed store, thus allowing an efficient utilization of the available memory resources. Moreover, embodiments of the invention are not facing the issue of memory fragmentation. A randomized uniform distribution of the fragments of each memory object across the plurality of store units composing the distributed object store is beneficial for integrity of the contents stored in the memory object, i.e. helps protecting against malicious attacks.

Embodiments of the present invention are particularly well-suited for programming models known as "functional programming with immutable data structures".

It is an advantage of embodiments of the invention that the physical addresses of memory locations in the distributed store (computer memory) are obtained by means of a function, i.e. are calculated instead of being searched in a large table, which reduces the latency of information load and store operations as well as the variability thereof.

It is a further advantage of embodiments of the invention that an object-based memory (the distributed store) is controlled by the memory object management unit of the compute nodes, which makes object storage transparent to the user. In addition thereto, object storage in the physical memory is more secure, since it is not possible to overwrite contents of one object by writing to another (implicit memory protection).

In preferred embodiments of the invention, the address calculations and data formatting operations are separated from the compute operations themselves ( "decoupled memory"). The address calculation and formatting of data is moved out of the compute core into a separate processing units, whereby the compute cores can be kept busy with doing useful computations.

It is an advantage of embodiments of the invention that information can be accessed in the distributed store with a minimum of indirection. In particular, embodiments of the invention can access information on the distributed store without the need of page tables and/or calls to the operating system. Each local compute node according to embodiments of the invention 'knows' exactly where the information to be accessed is located - because it is derived from the OlD and location inside the object) - and can therefore directly issue a request, e.g. network packet, to the distributed memory controller that holds the data. No operating system or central database is needed for accessing the computer memory.

It is an advantage of embodiments of the invention that a distributed computer memory can be provided that is free of, i.e. does not include, a hierarchical cache memory organization. Information access in accordance with advantageous embodiments of the invention does not require cache coherence/consistency control of local memories and/or synchronization between the compute nodes, hence are less or not at all affected by the corresponding communication overhead. By combining object-based machine memory with functional programming using immutable data structures, consistency issues related to shared memory resources can be avoided.

It is an advantage of embodiments of the invention that the contents of memory objects can be easily shared between application processes running on different or same compute nodes.

It is an advantage of embodiments of the invention that compute nodes are basic units that can be easily scaled in number, which makes them suitable for use in high performance computers. Moreover, a more efficient software pipelining of compute and memory operations can be obtained.

In contrast to conventional computer architectures, compute memory in accordance with embodiments of the invention is not under the direct control of a CPU, but is distributed over multiple controllers, each managing a smaller part of the compute memory. This distributed object store is preferably accessible via a network for which the network address are equal to the calculated physical memory address, or at least a portion thereof.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 is a graphical representation of a memory object.
FIG. 2 is a block diagram of a compute node according to a first embodiment of the invention.
FIG. 3 illustrates steps taken by the memory object management unit of a compute node, when translating memory addresses according to embodiments of the invention.
FIG. 4 is a block diagram of a compute node according to a second embodiment of the invention.
FIG. 5 depicts different stages of a pipeline associated with tasks performed by hardware components of a compute node in accordance with an embodiment of the invention.
FIG. 6 is a block diagram of a multi-node computer, comprising a plurality of compute nodes in accordance with embodiments of the invention.
FIG. 7 is a block diagram of a memory object management unit in accordance with embodiments of the invention.
FIG. 8 is a flowchart explaining a memory access method in accordance with embodiments of the invention.
FIG. 9 explains the flow of requests for information to be consumed by compute cores through a computer system comprising two compute nodes in accordance with embodiments of the invention.
FIG. 10 illustrates an example execution flow for an input program, using an embodiment of the invention.

The drawings are only schematic and are non-limiting. Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings, but is only limited by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

Hereinunder, the terms disaggregated storage (memory, store) and distributed storage (memory, store) are sometimes used interchangeably.

In the context of the present invention, a compute node is a scalable unit or building block for bigger compute systems like supercomputers. Compute nodes are replicated, typically a thousandfold or more, and assembled into a supercomputer. A compute node contains at least one compute core.

A compute core, in the context of the present invention, refers to a functional unit that is central to the compute node. The compute core is the node resource that is effectively executing program code; it therefor accepts instruction code and data to operate on. Both instruction code and data for execution by the core are core inputs which are stored in computer memory in the format of memory objects. Tasks performed by components of the compute node are a special type of memory objects. Compute tasks performed by the core include the computational processes of arithmetic calculations on data stored in memory objects and, occasionally, address calculations. In embodiments of the invention, core inputs in computer memory as well as tasks in compute memory are requested, referenced and accessed through their corresponding memory objects.

Memory objects, in the context of the present invention, refer to a storage format of information in a disaggregated computer memory, e.g. a distributed store. Here, information relates to data in the broadest sense and includes, among others, core inputs (instructions/code, data/operands), metadata associated with the information that is stored in memory objects, tasks, higher-level instructions like subroutines and functions, or combinations thereof. Memory objects are thus a container for organizing and storing content-related information. Information is typically stored in a self-contained way in memory objects. Each memory objects has its own logical address space associated with it, by means of which content stored in the memory object is referenceable. Memory objects further have an object identifier (OID) assigned to them, so that one can distinguish between the different coexisting memory objects. Moreover, memory objects are subdivided into fragments, which may be further structured into chunks, including nested chunks. Each fragment of each memory object is stored at a unique location in physical computer memory, preferably a disaggregated memory system, which is indicated by a physical memory address. Addresses have to translated between the logical address spaces of the memory objects and the corresponding physical address in compute memory, e.g. the distributed store, when exchanging information between the compute node core and compute memory during a memory access operation (e.g. load/store operations).

In the context of the present invention, a view of a memory object refers to a subcollection of fragments contained in this memory object, which are prepared for a more efficient utilization by the core. Preparation of data fragments includes reordering operations, vectorization or linearization operations, data/number type conversions, and the like. A view can be created for a single fragment. The compute cores thus perceive memory objects through the views that are derived from the memory objects and compute tasks - and also other tasks such as data formatting and prefetching - are typically defined with respect to views of memory objects. Views can be the result of a data address calculation, i.e. data fragments extracted out of a memory object according to a view definition which is by itself stored in a memory object, e.g. as metadata in a metadata chunk in the case of chunk-based memory objects. Views can be trivial linear access, strided access, block subselection, or any arbitrary access pattern that can be expressed in the view definition.

Memory management of most modern computer processors is based on virtual memory, in which the operating system assigns a virtual address space to a program loaded for execution, i.e. a process. Through the implementation of virtualization, the program perceives memory as a contiguous directly addressable space (flat or linear memory). Virtual address spaces can be assigned to each running process independently. These computer processors exclusively use virtual memory addresses to reference and access information - bytewise - that is located in the virtual memory and therefore rely on a memory management unit (MMU) that translates the virtual memory addresses into corresponding physical memory address (references to locations in main memory, e.g. RAM, or even in secondary storage, e.g. paged out to hard drive). Virtual memory address calculations are routinely performed by the computer processors, either within dedicated address calculation units or within one of the processor's execution units itself. Moreover, the relatively slow access to main or primary memory is usually alleviated by the use of hierarchical multi-level cache memory, which are intermediate memory devices situated between the processor and main memory to reduce read latencies and CPU stalls.

In contrast to the memory management techniques and related memory management units used by conventional computer processors, processing units of embodiments of the present invention are configured to reference and access information, i.e. memory contents, as fragments of memory objects. Much like the address spaces in virtual memory implementations, the memory objects represent contiguous blocks of memory to which processes executed on processing units have direct access. The contiguous block of memory associated with each memory object is subdivided into a plurality of linearly addressable fragments, thus forming a logical address space for information retrieval by the processes. Logical memory addresses of fragments accommodated in the memory object do have a physical counterpart; the logical memory addresses are mapped onto corresponding physical addresses that reference locations in main memory. As opposed to virtual memory, memory objects are not exclusively linked to processes. In fact, a process can create multiple independent memory objects. A memory object may be created as an efficient means to organize and access memory contents that are so interrelated to form a unit of information storage. This includes, for example, low-level features like constants, data variables, address variables, opcode/microcode and, more importantly, high-level programming language features such as arrays, callable units (e.g., functions, methods, subroutines), loops, matrices, vectors, trees, lists, classes and objects (as known from object-oriented programming), threads, etc. These and other features may be mixed and combined into predefined or user-defined units of information storage, i.e. memory objects. Eventually, stored information referenceable through the memory object may also include metadata, e.g., metadata about the memory object itself (date of creation, creating entity, size, permissions) and/or metadata about the information stored in the memory object's fragments, e.g. information on the data type and size of chunks of fragments (code chunk, data chunk, ...).

Different memory objects are distinguishable and can be referenced via a unique object identifier, called OlD for short. A memory object may be empty upon creation, e.g., not yet contain any valid references to information stored in main memory. The fragments contained in each memory object typically have a predefined size, e.g. one byte worth of physical memory cells, and can relate to any kind of information, including but not limited to, e.g., instructions (code), numerical data or operands consumed by the processing unit while executing instructions, and metadata associated with the memory object. Each fragment has a specific location within the memory object, which is indicated by an offset variable and used for addressing. Fragments that are consecutive in the memory object's logical address space can be structured into and collectively referenced as chunks; e.g. data chunks related to the storage of vector or array elements, or code chunks related to the storage of a set of program instructions.

A particularfragment of memory can be referenced by the combination of object identifier and fragment offset with respect to the memory object that is containing the fragment. This combination is unique across all coexisting memory objects that access information stored in computer memory, e.g. shared primary memory in a supercomputer comprising many compute cores that are each capable of generating and holding multiple memory objects. In consequence, a fragment of memory generally becomes inaccessible if the corresponding memory object ceases to exist, e.g. upon destruction of the memory object. On the other hand, the logical address space of each memory object is isolated from the logical address spaces of all the other coexisting memory objects, thereby improving computer security. Memory objects are an efficient implementation against unauthorized memory access, because the memory object that is requesting access to fragments belonging to a different memory object is unaware of the different memory object's identifier. Memory access may still be granted by the operating system, e.g. by communicating the relevant OlD to the requesting memory object, provided the requesting memory object has been created with or granted the necessary privileges. A specialized functional unit of the compute node (security unit) may be provided to handle security-related aspects such as the assignment of privileges or the grant access rights, either on its own or as a complement to the operating system.

A further layer of security is added by the innovative fact that the different fragments of one and the same memory object are stored in very different and unrelated locations in physical memory, i.e. each memory object, when stored in physical memory, is scattered throughout the available physical address space. For instance, the calculated physical memory addresses for fragments of the memory object to be stored are distributed in a uniform and random fashion. At the same time, different memory objects are stored in a non-overlapping manner in physical memory. This makes it impossible for one memory object to overwrite fragments belonging to a different memory object.

Another difference between memory objects and conventional virtual memory implementations is that logical memory addresses of fragments of memory objects are not subjected to an address translation based on page table entries; instead, the physical addresses of locations in computer memory corresponding to the respective fragments of memory objects are calculated. This is a major advantage compared to conventional computer architectures that revolve around the concept of paging, because a calculation of the corresponding physical memory addresses does not require the use of large page tables. This frees up memory resources that would otherwise be allocated to the storage of the page tables. Moreover, multi-node computers in which information sharing between the individual nodes is desirable, the page tables maintained with respect to the different nodes need to be synchronized. A calculation-based mapping of each fragment's logical address onto the corresponding physical address is not confronted with the communication overhead and power consumption which arise out of the page table synchronization. Furthermore, the time needed for performing the calculation of the physical memory address of each fragment from the aforementioned unique combination of OlD and fragment offset is deterministic. This is in contrast with the often unpredictable delay of information retrieval in the event of cache misses most conventional compute architectures experience.

A further advantage of embodiments of the invention over most conventional compute architectures and memory management techniques is that hierarchical multi-level cache memory is not needed. This saves hardware resources and energy related to the implementation and management of these traditional cache hierarchies. Indeed, data locality (in physical memory) cannot be exploited in embodiments of the invention as efficiently as it would be the case in conventional compute architecture with multi-level cache hierarchy, because consecutive fragments of a memory object are in general not mapped to nearby locations in the computer's main memory. Furthermore, in the absence of one or more levels of shared cache memory in multicore processor architectures, memory management is not facing the issue of cache coherency.

Nonetheless, it is possible for embodiments of the invention to provide a specialized kind of object cache, which temporarily stores the contents of one or multiple memory objects, or parts thereof. For instance, one or more object caches of a compute node in accordance with embodiments of the invention could temporarily store copies of recently accessed fragments and/or fragments whose offsets are nearby the offset of previously accessed fragments within one or multiple memory objects.

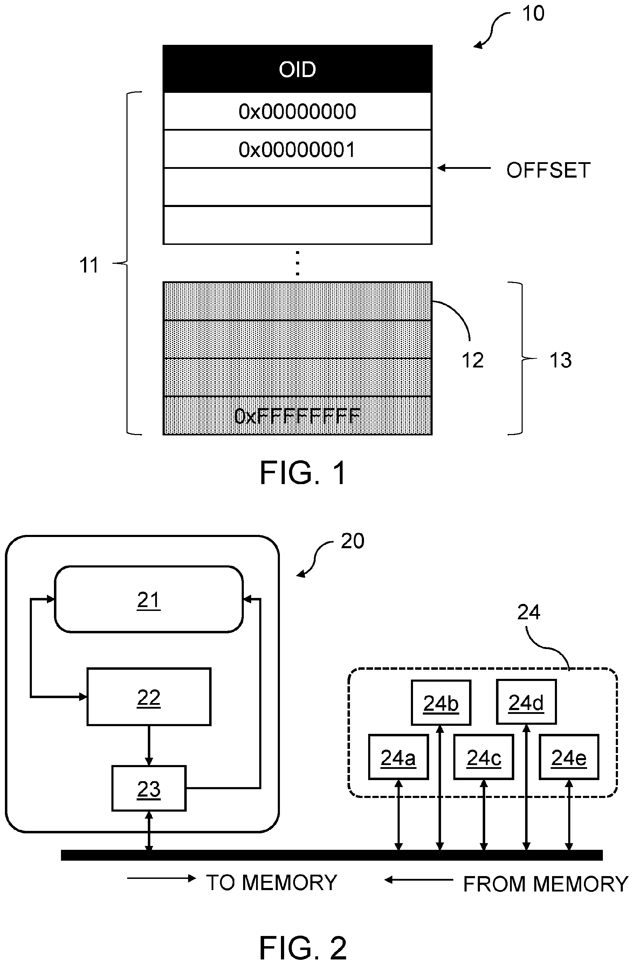

FIG. 1 graphically represents a memory object in accordance with embodiments of the invention. The memory object 10 is referenced through a unique OlD and comprises a linear space 11 of logical memory addresses, e.g. 32-bit long logical memory addresses 0x00000000 through 0xFFFFFFFF. Nonetheless, the logical address space of the memory object may be smaller or larger, depending on the overall size of physical memory attributed to the supercomputer in which the compute node is deployed. Each logical memory address refers to a fragment 12 of information stored on the computer's primary memory and forming part of a larger semantic unit of memory content, i.e. the memory object 10. An offset variable 'OFFSET' is an index to the location of a particular fragment within the address space of the memory object to which is belongs. Fragments 12 are sized equally, e.g. each one byte worth of physical storage, although different fragment sizes may be defined initially. Wider fragments have the advantage that more memory content can be accessed through a single load/store command, but require wider data busses too. A contiguous region within the memory object's logical address space 11 is clustered and assigned to chunk 13, which comprises a plurality of fragments. As explained hereinbelow, memory objects are the central objects handled by the memory object controller (MOC), which uses them to organize the way content-related information is stored and accessed in physical computer memory.

Referring now to FIG. 2, a first embodiment of a compute node is described. The compute node 20 comprises a processor core 21, a memory object management unit 22 and a communication interface 23, e.g. a network interface or system bus, which links the compute node to an external memory object store 24. The memory object store may be assembled from a plurality of separate memory modules 24a-e, which together form a distributed store. Each memory model 24a-e typically includes a complementary communication interface and its own local memory controller (not shown). The contents of the respective aforementioned memory objects are physically stored on the memory object store 24, which acts as the computer main memory for the core 21 of compute node 20. Although the compute node of the first embodiment has only a single compute core, compute node according to different embodiments of the invention may comprise multiple cores, e.g. two cores, four cores, eight cores, or more, which share memory object management unit that is common to all compute cores of the compute node.

The core 21 may be any register-based processor core with RISC, CISC or VLIW-type architecture as known in the art. A typical core 21 comprises multiple functional hardware units (e.g. instruction unit, execution units, control unit) and register sets as components. The functional units, in turn, may be constructed from several different or repeated subcomponents; the execution unit, for instance, may comprise one or multiple arithmetic logic units (ALUs), one or multiple floating-point unit (FPU), a load-store unit, etc. The core 21 is operatively coupled to the store 24 through the memory object management unit 22, which determines the physical memory addresses of fragments in memory objects that are currently being referenced by the core 21. In embodiments of the invention, a system bus may be provided to directly connect the core 21 to the memory object management unit 22. Alternatively, a connection between the core and the memory object management unit may be established by virtue of a communication channel that forms part of a larger network-on-chip communication subsystem (NoC).

Although the cores of a compute node can, in principle, reference individual data fragments of memory objects for computational tasks, it is more efficient for the cores to access and consume information content from linear data spaces, e.g. vectors of data in the strict sense or sequential instructions (e.g. as generated by the compiler). Therefore, compute nodes in accordance with embodiments of the invention may optionally include at least one data formatting unit, which assembles fragments of a referenced memory object into 'views', whereby information utilization, e.g. data utilization, by the one or more cores of the compute node is improved. Data fragments can be extracted out of a memory object according to a view definition, which is by itself stored in the memory object and executed by a dedicated data address calculation unit. A particular view of a memory object may be generated by reordering and/or vectorizing a subset of the fragments contained in the original memory object such that the core(s) can consume the prepared views in a linear fashion.

A typical situation that benefits from the reordering and/or vectorization of data fragments is the access of elements of an array, in which the access follows a particular patterns (e.g. using a specific stride parameter). The preparation of suitable views for the respective cores by the at least one data formatting unit may be optimized by a compiler at compile time. Until being consumed by the core(s), individual memory object fragments, or views that are generated from accessed memory objects, may be placed temporarily into a scratchpad memory or register file of the core(s). More generally, cores of the compute node can execute compute tasks with respect to any memory object; different memory objects being distinguished through different addresses at the core level (e.g. the OlD is part of the address at core level).

The memory object management unit 22 resembles the memory management unit (MMU) of conventional computer architectures in that it contains hardware for address translation. Traditionally, the MMU is configured for paging, i.e. the division of virtual address spaces into pages, and translation of virtual addresses into physical memory addresses by the use of page tables. Page table entries may be partly held in private memory of the MMU or a translation lookaside buffer (TLB), operatively coupled to the MMU, assists the MMU with the address translation task. TLB misses cause the CPU or the operating system to start a page walking process in which page table entries are retrieved from main memory. The MMU is also responsible for raising page fault exceptions in the event that no page table entry is found in main memory with respect to the virtual memory address currently being translated. A conventional MMU thus spends considerable amounts of time and energy to perform address translations by lookup operations in page tables. In contrast thereto, the memory object management unit (MOMU) in accordance with embodiments of the present invention is configured to derive the physical memory address corresponding to the memory object fragment that is referenced by the core by way of calculation. More specifically, the MOMU calculates the physical memory address as a function of the fragment offset and the OlD for the memory object that contains the referenced fragment. In preferred embodiments of the invention, the MOMU calculates the physical memory addresses according to a hash function. Thence it follows that no lookup operations for page table entries are necessary, page tables do not have to be maintained in computer memory and page fault exceptions never occur.

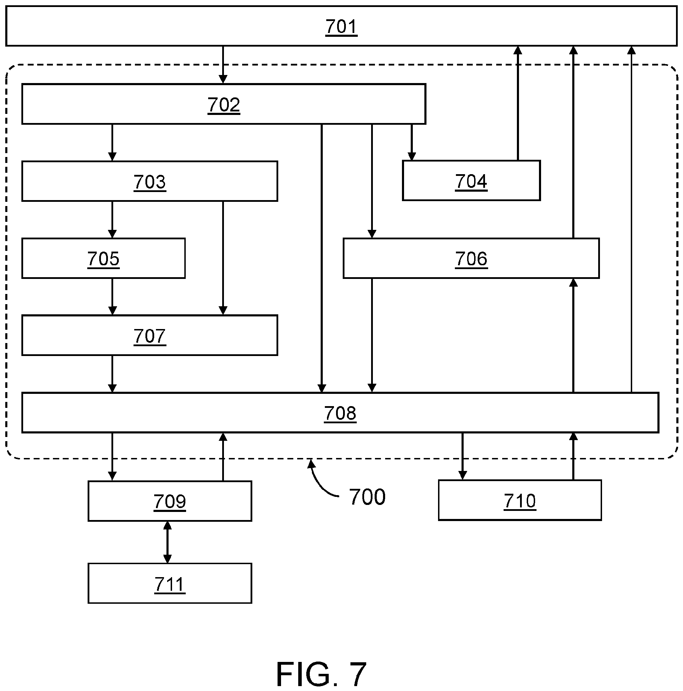

The inner workings of an exemplary memory object management unit (MOMU) are briefly described with reference to the block diagram of FIG. 7. The MOMU 700 is operatively coupled to a communication network interface 701, e.g. a network-on-chip (NoC) interface, over which messages relevant for the MOMU are exchanged. A message classifier unit 702 is arranged in a first stage and configured to detect the type of message that the MOMU 700 receives from the network interface 701 (e.g. read or write message, OlD request, etc.) and direct it to a key extraction unit 703 or an OlD generation unit 704 of the next stage. The key extraction unit 703 is configured to select the OID, fragment offset and, if indicated, the chunk number within the requested memory object from the incoming request and assemble them into a hash key. Other message content may be stripped by the key extraction unit 703. The so obtained hash key is passed as an input to a hash calculation unit 705, which is programmed to calculate a hash value from the received hash key. Hashes calculation is described in more detail, e.g., in Donald Knuth, "The Art of Computer Programming, Volume 3: Sorting and Searching", Addison-Wesley, 1973. The hash value, or a portion of the hash value, corresponds a network address for the requested piece of information and is sent to a message builder unit 707 of the subsequent stage. It is possible to derive modified hash values form the originally calculated has value, e.g. a first modified hash value destined for information requests into the distributed store and a second modified hash value destined for information access in the local cache memory. For instance, the number of bits of the initial hash value may be reduced to span the memory space of the local cache memory and/or the distributed store. Alternatively, the full number of bits of the initial hash value is used for the distributed store. Hash mixdown from N bits to fewer bis is described, e.g., in Luykx, Atul, et al. "Two-permutation-based hashing with binary mixing" Journal of Mathematical Cryptology, vol. 9, no. 3, 2015, pp. 139-150. This message builder unit 707 is configured to reassemble a request for the distributed memory object store and pass it on to a message router 708. The message router 708, in turn, is configured to direct the reassembled requests to either a global network interface 709, which provides the connection to the distributed store 711, or, if present in the same node as the MOMU, the local cache memory 710 of the compute node. In exemplary embodiments of the invention, message router 708 may be configured to direct reassembled "write/store" messages to both the distributed store and the local cache memory, whereas reassembled "read/load" messages are first directed to the local cache memory and only if there is a local cache miss, the reassembled "read/load" messages are subsequently sent to the distributed store. Hence, the flow of information having the appearance of message packets in the case of a "read miss" would be: message builder unit 707 - message router 708 - local cache memory 710 - message router 708 - global network interface 709 - distributed store 711 - global network interface 709 - message router 708 - local, e.g. on-chip, network interface 701. In the case of a "read hit", the corresponding flow would be: message builder unit 707 - message router 708 - local cache memory 710 - message router 708 - local, e.g. on-chip, network interface 701. The message router is thus configured to decide on the destination or sequence of destinations of reassembled message packets. The aforementioned message types are non-limiting examples of various message types the message router can handle. For instance, the message classifier unit 702 of the MOMU may also verify access rights and generate and send "access denied" messages to the network interface 701 via the message router 708.

The OlD generation unit 704 is configured to issue new OIDs to the requestors (OID request), e.g. if a task management unit of the computer core assigns the result of a mathematical computation or transformation (number or vector addition, multiplication, scaling operations or more complex arithmetic functions such as logarithms, exponentials, or trigonometric functions, and others) to a new, i.e. currently non-existing, memory object. In alternative embodiments, the OlD generation unit of the MOMU can be implemented, e.g. embedded, in the task management unit of the compute node. New OID's to be issued may be generated as a snowflake ID, e.g. combine timestamping information and a node identifier (unique) to obtain a memory object identifier (OID) that is unique. A particular type of messages is concerned with memory object manipulations that target the metadata associated with memory objects, e.g. metadata stored in a dedicated metadata chunk of the object or metadata inserted at the start or appended at the end of a data/code chunk in chunk-based storage formats of the memory objects. These memory object manipulation operations are handled by an object manipulation unit 706 of the MOMU 700. They may include the splitting or merging of two distinct memory objects, but are not limited thereto. The object manipulation unit may be implemented as a conventional compute core, e.g. a RISC-V executing software programmed to alter the metadata of the memory objects.

Referring back to FIG. 2, the MOMU is further configured to package and/or encode the information to be stored in the memory object fragment that is being accessed and combine it with the calculated physical memory address for the memory object fragment. Obviously, no information is included in the case of accessing a memory object fragment under a load command of the compute core. The resulting data packet or data frame is submitted to the communication interface 23, which is configured to schedule the transmission of submitted data packets or frames over the communication link or network that interconnects the compute node 20 with the memory modules 24a-e of the distributed memory object store 24. The communication interface 23 is also configured to receive data packets or frames from the memory modules 24a-e of the distributed memory object store 24, which contain the information retrieved from stored memory object fragments referenced by the compute core in the context of a load command. Responses, e.g. data packets or frames with respect to requested object fragments, are routed by the MOMU and passed on to the compute cores, optionally including the step of stripping details from the received data packets that are unnecessary for on-chip (e.g. intranode) communication, thereby making on-chip communication more efficient.

Memory modules 24a-e are store units with respective communication interfaces, which are endpoints of a communication network, e.g. cluster network, and recipients of data packets or frames dispatched by the interface unit 23. In preferred embodiments of the invention, a portion of the calculated physical address, e.g. the k most significant bits, directly form a corresponding network address for one the memory modules, whereas the least significant bits can be used by a local memory controller of the receiving memory module to determine the location in the local memory that has been attributed to the memory module. Alternatively, a network address for the physical address can be obtained by calculation or via a lookup table. Conversely, in the context of load commands, the memory modules 24a-e act as the sending nodes of the network, whereas the interface 23 of the compute node is the recipient of data packets or frames that contain the information of the requested memory object fragments. The memory modules may be self-contained memory devices or may be comprised by other device, e.g. comprised by other compute nodes.

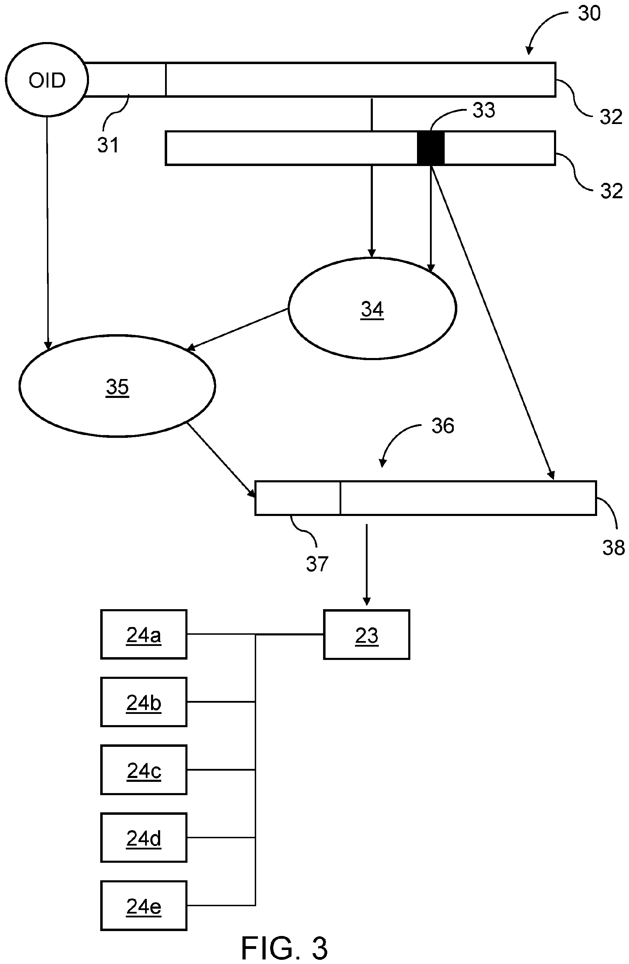

FIG. 3 illustrates the steps that the MOMU performs when transforming a memory object fragment into a data packet for submission over a cluster network and storage on a distributed physical memory system. Memory object 30 depicts the continuous block of memory as perceived by the processor core, which contains a first chunk 31 allocated to metadata and a second chunk 32 containing data. The compute core references information of fragment 33 in chunk 32 in the context of a store command. An OlD is associated with memory object 30. The MOMU generates the OlD upon creation of the memory object, typically when a task using this memory object is first evoked.

The MOMU uses the chunk index and the relative fragment offset within the second chunk 32 to compute the absolute offset of the fragment 33 in the memory object 30 in step 34. The absolute offset of fragment 33 and the OID are inputs to a hash function that the MOMU calculates in step 35. Next, the MOMU prepares a data packet 36 for submission by the network interface 23, wherein a first portion 37 of the data packet 36 contains the output of the hash function from step 35 and a second portion 38 contains the information to be stored in the physical memory location of fragment 33. The most significant bits of the first portion 37 are identical to a network address of the cluster network and thus identify the recipient of the data packet 36; in this case, the recipient corresponds to one of the memory modules 24a-e. The least significant bits are used by the memory controller of the receiving memory module to determine the location in its own local memory, where the fragment information is stored.

Evaluating the output of the hash function (i.e., the hash value) in step 35 therefore amounts to the calculation of the physical memory address for memory contents to be loaded or stored. The computed hash value are used as indexes into a giant distributed hash table for information retrieval. The distributed hash table is formed by the joint memories of all memory modules of the distributed object store 24. The hash table entries correspond to the memory contents that are stored in the respective memory object fragments and are referenced by the physical memory addresses (the local memory addresses being the hashed keys). The use of a hash function ensures that physical memory addresses are distributed in a uniform-random way and that information can be accessed with uniform latency. Fragments belonging to one memory object are thus scattered across the distributed memory. Each fragment worth of information can be stored in multiple locations of the distributed memory object store, e.g. duplicated, to save a backup copy in the case of failure of one of the memory modules. Preferably, the hash function used by the MOMU is a minimum-collision hash function. Collisions can be detected at the level of the individual memory modules that compose the distributed memory object store; write request are locally checked against an allocation table. In the event that a collision is detected locally, the memory controller associated with the memory module relocates the information to be stored to an alternative storage location in memory. The allocation table may be configured to always provide at least one alternative storage location. Moreover, the MOMU may be configured to compute a series of hash values (orthogonal hashes) for each fragment to be stored in the distributed memory, e.g. up to four or more different physical memory location. If a collision is detected with respect to the first hash value of the series of hash values, and the alternative storage location is also occupied, then the fragment of information to be stored can be forwarded to the memory module corresponding to the next hash value in the series of hash values. In the rare case that collisions are detected with respect to all hash values of the series of hash values, and all the alternative storage locations are also occupied, the distributed object store considers main memory to be full and issues a write failure. This may result in the operating system displacing some memory contents into secondary memory storage devices.

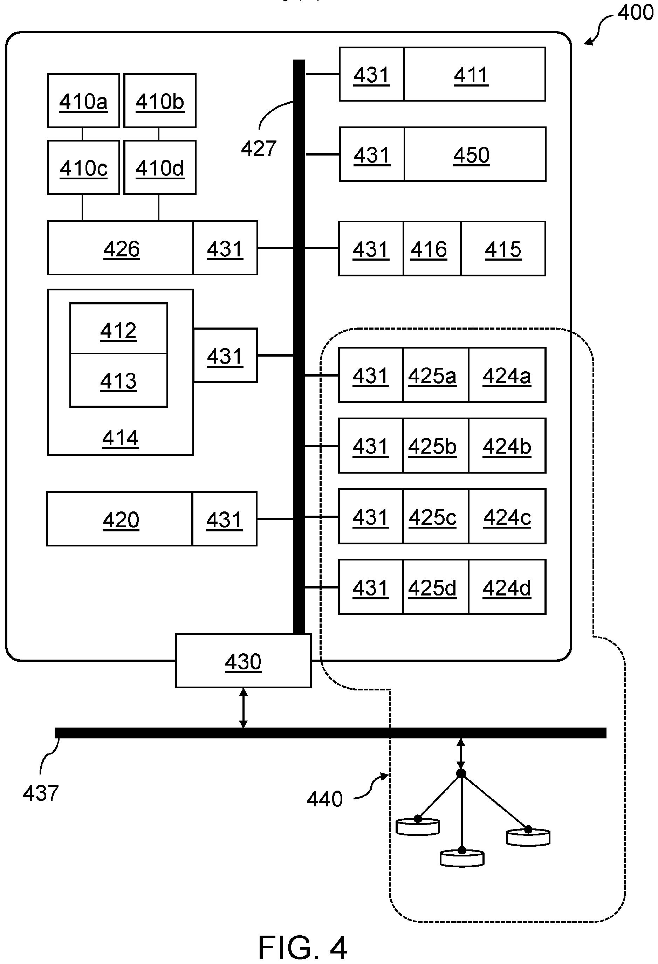

Referring now to FIG. 4, a second embodiment of a compute node is described. The compute node 400 of the second embodiment comprises the same components as the compute node of the first embodiment, i.e., compute core arrays 410a-d, a memory object management unit (MOMU) 420, and a network interface 430 as node interface to a communication system or subsystem 437. Additionally, the compute node 400 comprises at least one task management unit 411, data formatting units 412, address calculation units 413, a node-local cache memory 415 with associated controller 416, and node-local store units 424a-d with respective controllers 425a-d. The data formatting units 412 and address calculation units 413 may be arranged into combine data formatting/address calculation units 414, each being associated with and serving a respective one of the compute core arrays 410a-d. Preferably, a fast register file or scratchpad memory 426 is provided between the data formatting/address calculation units 414a-d and the compute core arrays 410a-d, wherein each core array comprises a plurality of compute cores, e.g. two, four, or more than four compute cores per array. A communication network 427, e.g. a network-on-chip, interconnects the various components of the compute node 400, which are all equipped with adequate network interfaces or communication ports 431.

In typical applications, the node-local store units 424a-d, e.g. DRAM modules or nonvolatile memory modules, effectively contribute to the primary memory of a computing device composed of multiple similar or identical, interconnected compute nodes. Thus, the node-local store units 424a-d are generally treated like distributed store units of a larger computer memory system structured as a distributed store 440 for memory objects. In other words, the store units 424a-d are elements of a disaggregated memory model. In embodiments of the invention, store unit 424a-d may be assembled onto a circuit board for the compute node 400 or may be integrated onto a chip for the compute node. Memory access to each store unit 424a-d is controlled locally by a corresponding memory controller 425a-d.

Conventional compute cores are regularly operated in modes which allow the calculation of virtual memory addresses for fetching future data from main memory and the correct formatting of the fetched data for efficient use by the core's executions units. CPU cycles allocated to these tasks are lost for actual computational tasks performed on the data fetched from main memory. In the present embodiment, the data formatting units 412 and address calculation units 413 are functional units that are configured to perform the data formatting tasks and address calculation tasks, respectively, but have been moved out of the compute cores. This decoupling from the compute cores is also referred to as "decoupled memory" and has the advantage that data formatting units, address calculation units and compute cores can be operated to perform different tasks concurrently. Importantly, the compute cores can spent more cycles on computational tasks, while the address calculation units 413 determine the logical memory addresses of memory object fragments, e.g. containing data/operands for computations, to be consumed by the compute cores 410a-d in the near future. The address calculation units 413 may execute a kernel in order to execute view definition associated with a memory object, e.g. as specified in a metadata chunk of the memory object. Memory object fragments loaded or prefetched from the distributed memory object store 440 are referenced by the logical addresses computed by the address calculation units 413 and subsequently translated by the memory object management unit 420. Although most of the address calculation is handled by the address calculation units 413, it may still be the case that the compute cores 410a-d are occasionally used for address calculation tasks. The data formatting units 412 then handle the formatting of information from memory object fragments that have been loaded or pre-fetched from the distributed store 440. Formatting of data (including instructions) allows the compute cores to perform computations more efficiently. Information is not always stored in computer memory in a way that is adequate or optimal for computational tasks. For instance, instructions may have to be fused into more complex instructions for the compute cores, array elements may have to be aligned and rearranged into a vectorized format that is usable in vector operations by the compute cores, or number formats may have to be converted. In operation, the data formatting units thus prepare the loaded or pre-fetched information for future use by the compute cores. Information preparation tasks performed by the data formatting units include the following: data ordering, data vectorization, data type casting. The correctly formatted information is then transferred to the scratchpad memory 426, where it is buffered until one of the compute cores starts consuming it. Advantageously, the data formatting units also buffer differences in the information consumption rate between the compute cores on the one hand and the information fetching process on the other hand. The former is steady and synchronous, whereas the latter is asynchronous and out-of-order.

As explained before, the MOMU 420 is the functional unit of the compute node that handles memory objects, e.g., is hardwired or executes kernels that cause the creation and destruction of memory objects upon request by the task management unit 411, generates the OIDs associated with a new memory object and communicates it to the task management unit 411, controls the access of fragments within memory objects when reading information from or writing information into the distributed (memory object) store. In embodiments of the invention, the MOMU may generate the OlD as a snowflake ID, e.g. combine timestamping information and a node identifier (unique) to obtain a memory object identifier (OID) that is unique. The MOMU may also be configured to initialize, execute and control pre-fetching operations on memory object fragments. Load/store commands are submitted to and handled by the MOMU 420 similarly to the steps explained with reference to FIG. 3, with the difference that a local copy of pre-fetched and/or repeatedly used memory object fragments, or even entire memory objects, may be kept in the node-local cache memory 415. In the present embodiment, the MOMU 420 thus first checks whether the node-local cache memory 415 is holding the information of a memory object fragment that is being referenced by one of the compute cores or pre-fetched by the MOMU. To this end, the MOMU may calculate a (shorter) local hash code from the fragment offset and the OlD of the memory object containing the fragment and submit the local hash code to memory controller 416, which in turn checks it against its private local cache hash table. If the requested fragment exists as entry of the local cache hash table, the information stored in the fragment is forwarded to the MOMU; otherwise, the MOMU will continue with the calculation of the physical memory address for accessing the requested fragment in the distributed object store 440 and prepare the corresponding network packet. In embodiments of the invention, the MOMU is not limited to the aforementioned tasks; it can also manipulate metadata that is stored in fragments of memory objects, e.g., to merge or split memory objects, and may further support memory object manipulations required for immutable data structures.

In contrast to conventional compute architectures, information stored in the framework of memory objects does not have to undergo a lengthy search. When information is fetched from a remote node in traditional implementations multi-node compute clusters, the requesting node first checks all its cache levels before the operating system is queried, sends a message to the remote node, retrieved the requested data and finally hands it over to the requesting node. In embodiments of the invention, no such complex information retrieval process is necessary, because the MOMU of the requesting compute node can exactly locate the requested piece of information in memory through a calculation of the physical memory address. A network packed can then be issued directly to the distributed memory controller whose store unit holds the information. Hence, neither the operating system nor a central database is involved in the information retrieval, whereby resources and latency related to information access are significantly reduced.

Preferably, the node's communication interface rather than the node's MOMU handles encryption/deciphering of information, e.g. the operations of encoding and decoding of information to be transmitted over the communication network. This further reduces information retrieval/memory access latency, because no encryption is required for information that is already present in the node-local cache memory.

In embodiments of the invention, security features may be integrated into the network interface 430, e.g. a node-local firewall. A subunit of the interface 430, or separate network management unit(s) of the compute node 400, may precondition and monitor the flow of data packets within the node 400 and across the extended network or communication system that interconnects the various compute nodes of a multi-node computer.

A security management unit 450 may be configured to verify and grant access rights to memory objects that actively managed by the MOMU 420, and manage privileges associated with memory objects handled by the MOMU 420. The security management unit 450 may perform these tasks independently or in cooperation with an operating system.

The task management unit 411 is configured to allocate and assign tasks at runtime to the other components of compute node 400. Each task can be broken up into a sequence of subtasks, including, not necessarily in this order: the assignment of computational subtasks to the various compute cores of arrays 410a-d, the assignment of data formatting subtasks to the data formatting units 412, the assignment of address calculation subtasks to the address calculation units 413, fragment prefetching by the MOMU 420, and memory object creation/destruction requests to the MOMU 420. Not all the subtasks are always present in each sequence; there can be bubbles/gaps. The task management unit 411 is also configured to control the timing and order in which the allocated tasks are performed by the other compute node components. A corresponding kernel may be executed by the task management unit to this effect. In preferred embodiments of the invention, the task management unit 411 controls the runtime behavior of allocated tasks such that different compute node components operate in parallel, i.e., perform different tasks concurrently. Moreover, the task management unit 411 may implement pipelining of tasks in which subtasks have to be completed sequentially. Therefore, the data formatting units 412, address calculation units 413, and MOMU 420 may be assigned different tasks in the respective stages of the pipeline, but jointly complete a single task by progressively passing the outputs of a subtask in a current stage to the relevant unit of the next stage of the pipeline.

In embodiments of the present invention, the one or multiple task management units of the compute node may be implemented as traditional cores that are configured to create task objects - a special subtype of the generic memory objects - and pass the OlD associated with the task object (task OID) to the data formatting units and compute cores for execution. Consequently, task management units in accordance with embodiments of the invention are also capable of generating new memory objects, e.g. task objects, which can be stored in the distributed memory object store (computer main memory) and local cache memory like any other type of memory object. This greatly simplifies the problem of task migration between different compute nodes. Additionally, the task management unit(s) may be programmed to run a task scheduler (itself a task object) that assigns and times the execution of other task objects such as task objects related to data prefetching, data formatting, computations, memory object manipulation, etc. The task objects typically define operations on 'views' derived from memory objects.

In embodiments of the invention that provide multiple task management units, e.g. as part of the same compute node or distributed over several compute nodes of a multi-node supercomputer, an initial task management unit is selected to start in a boot mode, which allows the compute node or supercomputer to accept user code (program code) as input, divide the user code into subtasks and hand these subtasks over to the other task management units, which may then accept subtasks for execution. Task scheduling, in the context of the present invention, is a considered itself as a particular type of task and may be part of the machine's firmware (i.e. compute node firmware).

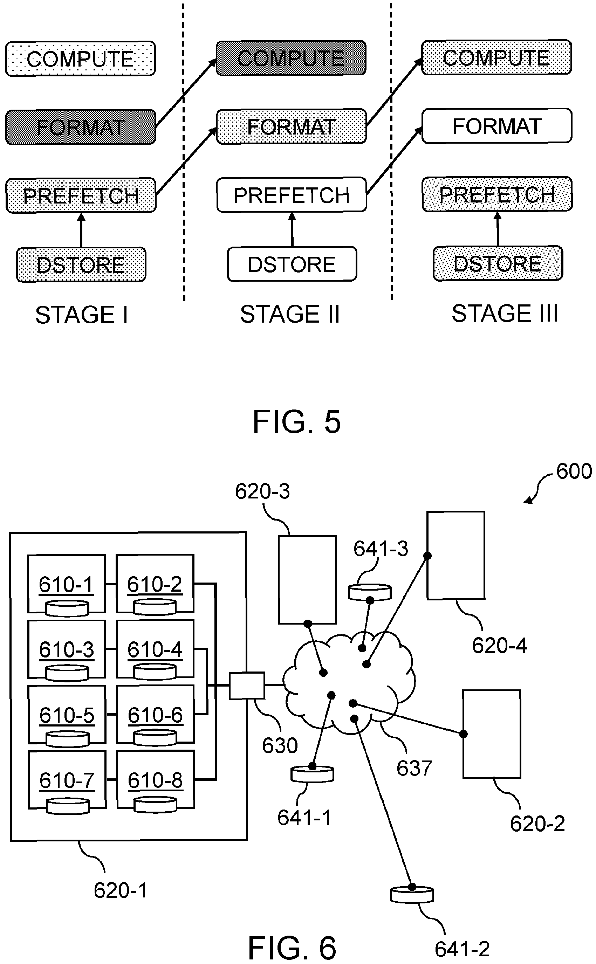

FIG. 5 illustrates one example of how the task management unit of a compute node in accordance with embodiments of the invention organizes the allocation of tasks into a pipeline. In stage I of the pipeline, task 'N' allocated by the task management unit is busy in the MOMU, which performs a prefetch operation on a memory object fragment as subtask. The fragment is prefetched from the distributed object store 'DSTORE'. Also in stage I of the pipeline, a previously allocated task 'N-1' is busy in the data formatting unit, which performs data formatting operations on fragment information that has been prefetched in the course of task 'N-1'. Still in stage I, an even earlier task 'N-2' is busy in a compute core, which performs a computational subtask on already formatted fragment information. The data formatting unit, the compute core and the MOMU perform their subtasks concurrently in stage I.

In stage II of the pipeline, the fragment information prefetched with respect to task 'N' is forwarded to the data formatting unit, which now is formatting the prefetched information for task 'N'. At the same time, the compute core deals with the formatted information of task 'N-1' and the MOMU starts prefetching a fresh fragment worth of information that corresponds to a further task 'N+1' allocated by the task management unit. Task 'N-2' may have been completed at the moment in time, or is busy with another subtask, e.g. writeback of the results from the compute core.

Likewise, in stage III of the pipeline, the fragment information prefetched with respect to task 'N+1' is forwarded to the data formatting unit. At the same time, the compute core starts manipulating the formatted information of task 'N' and the MOMU prefetches new fragment information from the distributed object store 'DSTORE', in accordance with yet another task 'N+2' allocated by the task management unit. By now, task 'N-1' may also be complete or is busy with another subtask, e.g. writeback of the results from the compute core. The task management unit may continuously allocate new tasks to keep the above described pipeline filled at all times, thereby efficiently exploiting the hardware subdivision of the compute node.

The invention also relates to a multi-node multiprocessing computer for high-performance computing applications. The multiprocessing computer - a supercomputer-comprises a plurality of compute nodes according to embodiments of the first aspect of the present invention and a disaggregated memory. The compute nodes indeed have the advantage of being highly scalable base units for assembling the supercomputer. Here, multiprocessing relates to the parallel execution of more than one computer program, e.g. application processes or user programs, and the resources required therefor. Each process may create one or multiple threads, which are smaller executable entities related to the process that typically share the same memory resources. Moreover, a task typically refers to a unit of work being executed, whereas a process rather specifies what needs to be done, independently of it " being done" right now. In embodiments, a small operating system may be provided that performs thread handling (e.g. FreeRTOS).

In the computer, the multiple nodes are operatively connected through a communication network, i.e., form a set of interconnected network nodes. The communication network typically comprises a node-internal communication subsystem, e.g. a network-on-chip, and an intra-node communication subsystem, e.g., ethernet network and/or optical fiber communication network. The compute nodes all have a network interface module and can be addressed by a portion of the network address. Node-internal components can all be reached via full network addresses.

A disaggregated computer memory is provided by a plurality of store units that are distributed over a plurality of locations, i.e., form a computer main memory that is decentralized. Access to the distributed store units is controlled independently for each store unit by a local memory controller. In particular embodiments of the invention, the store units composing the disaggregated computer memory are all distributed over and assembled into the compute nodes. Therefore, each compute node may contain at least one store unit, e.g. a plurality of store units, as a fraction of the overall computer memory or distributed store. In other embodiments of the invention, the store units composing the disaggregated computer memory are provided as self-contained memory modules and are independent of the compute nodes. In yet other embodiments, the store units composing the disaggregated computer memory are provided as a combination of self-contained memory modules and node-internal store units. There are thus more store units than compute nodes in typical embodiments of the invention.

FIG. 6 is a block diagram of a supercomputer 600, which comprises a large number of compute nodes which are organized into separate clusters 620-1 through 620-4. Each cluster of the computer 600 comprises a plurality of compute nodes that are accessible over a communication network 637, e.g. via a cluster-level network interface 630. For instance, cluster 620-1 comprises eight identical compute nodes 610-1 to 610-8, each equipped with node-local store units that contribute to the larger distributed computer memory. The cluster's network interface 630 may be equipped with a firewall. Moreover, separate node-external memory modules 641-1 through 641-3 may be connected to the network 637, too. These memory modules 641-1 through 641-3, e.g. DRAM modules, can be equipped with respective network communication interfaces and memory controllers and used as store units of the disaggregated computer memory, e.g. if there is not enough physical memory provided by the node-local store units. Each store unit of the distributed computer memory (distributed object store) has a unique network address associated therewith.

In embodiments of the invention, the local memory controller of each store unit may be configured to hold and maintain the corresponding local portion of a global, distributed hash table. The local portions of the distributed hash table may comprise the least significant bits (LSBs) of the physical memory address that is computed, e.g. as the hash code output of a hash function, by the MOMU of the compute node that requests memory access, while the most significant bits (MSBs) of the same computed physical memory address are used as a network address of the store unit. Of course, the role of MSBs and LSBs can be inverted and the number of bits that are used as network addresses can be varied according to the overall size of distributed computer memory. This allows easy future scaling of computer memory to larger overall memory sizes, e.g. doubling or power-of-two scaling of the amount of computer memory. Ideally, the store units composing the disaggregated computer memory have similar or identical properties, e.g. with regard to data transfer rates, read/write latencies, modular memory size.

In embodiments of the invention, stored information fragments of each individual memory objects are scattered over the whole computer memory, e.g. distributed in a random and uniform manner over the physical address space. The MOMU handling a particular memory objects can quickly compute the physical memory address corresponding to memory fragments referenced by the compute cores of the same compute node that also contains the MOMU and thus gather information fragments that are scattered over a large number of remote store units (e.g., if the relevant fragments were not found in the node-local cache memory). Stored information fragments can also be shared among multiple processes that are executed by compute cores belonging to different compute nodes. Processes on one compute node generate memory objects that are normally not accessible to MOMUs handling memory objects that were generated by compute cores of a different compute node, because their OIDs will differ. However, compute nodes may still exchange information related to shared memory resources over the communication network. In order to access memory content on the behalf of a different compute node, the MOMU or a dedicated security unit of compute node responsible for managing this content first has to verify that the correct access rights have been granted. If no access right have been granted, the MOMU or security unit may dispatch an "access denied" message. OIDs may be shared just like any data, i.e. the value of an OlD is an output from one task and input for another task. Typically only the creator/owner task of an OlD can write, while others have read access. Software locks may be used to handle write permissions set by the programmer.

As described previously, the compute nodes composing the supercomputer may each contain an object cache memory that is storing memory objects, or relevant parts thereof, at the node-level. Even though it is feasible to maintain more than one local copy of a memory object, or fragments thereof, in a corresponding number of compute nodes, not every compute node is allowed to modify or write into a memory object that is a shared resource. More specifically, only the node-bound creator task that caused the generation of the memory object as shared resource may have the rights to alter the information content of the memory object, while tasks that are not native to the node are lacking these rights. Tasks running on different nodes may still be able to read information content of shared memory objects that are stored in the local object cache memory. Typically, no consumer task is spawned while a producer task is running on the same object (data dependency check in task graph), such that a programming model for this computer architecture is capable of anticipating write inconsistencies in shared memory objects.

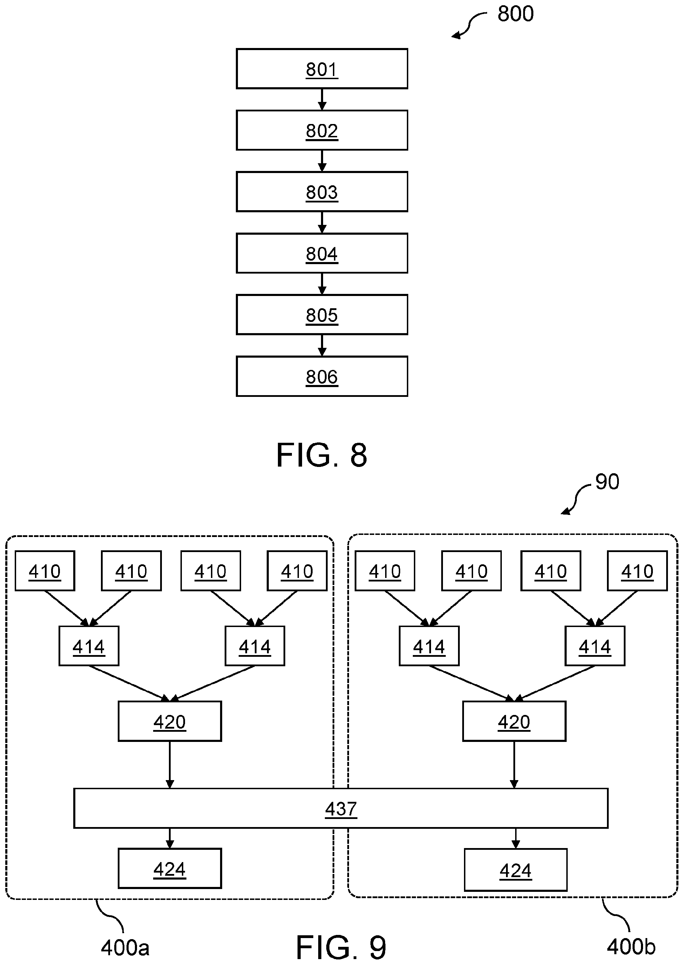

Briefly referring to FIG. 9, the flow of requests for information to be consumed by the compute cores through a computer system 90 comprising two compute nodes 400a-b (each including four cores) is illustrated. Each compute core 410 may send a request or wait for a memory object view to be processed, wherein requests are sent over the intra-node network, e.g. an on-chip communication network. The address calculation units 414 of each node transform the request for the memory object view into a corresponding request for a particular set of memory object fragments, by performing address calculation in the contiguous logical address space associated with the relevant memory object. Next, the MOMUs 420 calculate, for each one of the requested fragments, the physical address of the corresponding memory location in the distributed store. A portion of the calculated physical addresses are used as network addresses in a global communication network. Requests for fragments at the specified physical memory addresses are sent over the network in the form of data packets and are received by the relevant store units 424 of the distributed object store. The store units of the distributed object store may each comprise several memory modules.

The present invention also relates to a memory access method for a computer, for instance a supercomputer. The computer comprises a plurality of compute nodes, for instance, compute nodes according to embodiments of the first aspect of the invention, and a distributed store as the computer's main memory. Typically, the distributed store comprises or is composed of a plurality of store units, which are independent of each other, and access to the individual store units is controlled by respective memory controllers - a disaggregated computer memory model. A part or all of the store units may be assembled or integrated into the compute nodes; that is, each compute node may comprise one or multiple of the plurality of store units (e.g. memory modules, e.g. DRAM modules). Nonetheless, some store units may be provided separately from the compute nodes. The memory access method can also be used for a computer memory that is centralized, i.e. computer main memory that is not distributed. A memory access may be requested by a compute core located in one of the compute nodes when trying to load or store information required for execution of a compute task. Information that is input to the compute cores is accessible on the distributed store, where it is organized and stored as fragments of a memory object. The compute core is not aware of the storage locations of the different memory object fragments in the computer's distributed memory, but references the desired fragments, e.g. as part of a view, through the fragments' position in the respective logical address spaces that are associated with the memory object that contains the referenced fragments. Compute tasks processed by the compute cores are typically assigned by task management units of the different compute nodes, whereby tasks are themselves treated as memory objects and can be migrated between nodes.

The steps of an exemplary memory access method 800 are now described with reference to FIG. 8.

In step 801, information accessible in the distributed store is organized into memory objects as the underlying storage format. This step is implicitly fulfilled as soon as the user's program has defined all its data structures, functions, subroutines, etc., which are then translated into different types of memory objects upon compilation. Information is thus always presented in the context of memory objects. Calculated or intermediate computational results and inputs from I/O devices are also identified with memory objects, which can be allocated dynamically during runtime, e.g. by the MOMU of a compute node upon request by the task management unit.

In step 802, a unique identifier (OID) is assigned to each memory object and each memory object is also subdivided into a plurality of fragments, such that the different fragments of the memory object have different offsets in the logical address space associated with the memory object. As a result thereof, the information accessible in the distributed store corresponds to fragments of memory objects. The MOMU and task management units of each compute node may assign OIDs to memory objects upon creation, e.g. by means of a snowflake ID generator that uses a timestamp and compute node ID as inputs.

Next, the unique identifiers (OID) of the respective memory objects which contain fragments referenced by one or multiple compute cores of the computer are determined in step 803, e.g. by isolating the OlD-containing portion of the core address used by the requesting core, followed by determination step 804, in which the respective offsets for the fragments referenced by the one or multiple compute cores are obtained. Fragment offsets can be derived from memory object views by a data address calculation unit of the compute node, which is adapted to execute view definitions.

In step 805, physical addresses of memory locations in the distributed store are calculated for each one of the referenced fragments as a function of the fragment offset and the unique identifier of the memory object corresponding to the fragment. This step may include the calculation of a hash value by evaluating a hash function and can be carried out by a hash calculator inside the compute node's MOMU.

Eventually, accessing 806 the fragments referenced by said one or multiple compute cores from the respective memory locations in the distributed store through the corresponding physical addresses.

In embodiments of the invention, the memory access method may further comprise the step of distributing the fragments of each memory object, accessible in the distributed store, over the plurality of store units by calculating the physical addresses of the respective memory locations in the distributed store according to a random uniformly distributed function, e.g. a hash function, preferably a minimum-collision hash function. Collisions of hash values may be resolved in the way that has been described before. Moreover, the method may comprise formatting the accessed memory object fragments to improve information utilization by the compute cores. Formatting tasks may include the reordering, linearization, vectorization, patterned access, and subselection of accessed memory object fragments prior to consumption by the compute cores. The formatting task objects may specify the memory addresses of a scratchpad memory or register file of the compute cores, where the formatted memory objects, i.e. the views, are placed temporarily. The kernel executed on the compute cores then consumes the views from the scratchpad. In addition thereto, parts of the scratchpad can be allocated to "kernel in-scope" temporary data in a heap-based way.

In embodiments of the invention, the memory access method is also applicable to information that is referenced by the MOMUs of the compute nodes in the context of assigned prefetching tasks, which are defined with respect to memory objects, parts of memory objects (e.g. fragments, chunks), or views derived from memory objects. Furthermore, the memory access method is also applicable to information that is accessed on the node-local cache memories, for faster retrieval, before being accessed in the distributed store in the case of a cache miss.

Furthermore, compute tasks may be part of a larger program, e.g. user-specified program code, which is itself represented and stored under the format of a memory object. Upon compilation or during runtime of the program code, the code is translated or decomposed into a sequence of tasks, e.g. following a dataflow/compute graph having task objects as graph nodes, such that each tasks contains information about its predecessor and its successor.

In embodiments of the invention, execution of program code typically includes three parts:
(i) a kernel executing on a compute core (executable code for the compute cores), which takes views as input and may produce views as outputs, too;
(ii) a kernel executing on the data formatting and address calculation units, data units for short, which processes memory objects, or parts thereof, into views in accordance with a view definition (executable code for data units);
(iii) execution of a task splitting and/or joining algorithm that divides a task into smaller ones and/or reassembles smaller tasks into more complex ones (executable code for the task management units).

In embodiments of the invention, tasks and the related task objects can be further classified and conditionally converted into a different class in the following way:
(a) Normal tasks which can be moved across the machine (computer), but are too big to execute on a compute core and need to be split in subtasks. The resulting subtasks, in turn, are either normal tasks or atomic tasks.
(b) Atomic tasks which can be moved across the machine and are small enough to fit on a compute core, thus not being split anymore.
(c) Kernel tasks are atomic tasks that have been compiled/linked for local execution, and consists of a task kernel and a view definition. Kernel tasks are bound to a group, e.g. cluster, of compute cores managed by a task management unit.

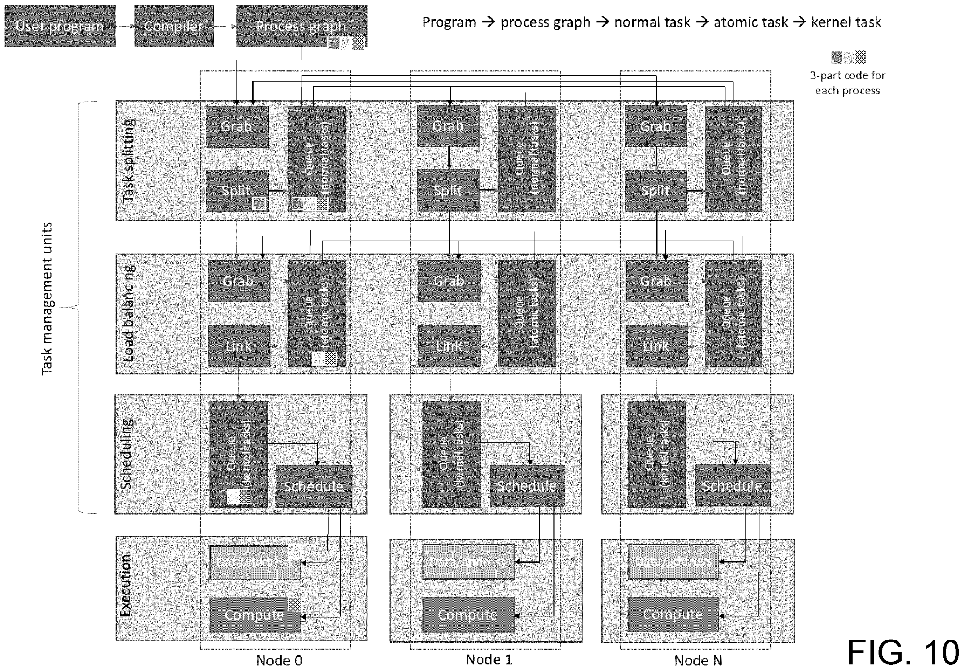

In the following, an example execution flow is described with reference to FIG. 10. At the start, a user or programmer provides the top-level main task which contains the kernels, view definitions and code for the task splitter/joiner algorithm as a 3-part code (indicated as square boxes in the figure), which are preferably provided in a math library file. Typically, the programmer would then combine elements provided by a software library, e.g. call a sparse matrix-vector multiplication on a vector A and matrix B, with the elements provided in the math library file. Upon compilation of the user program, a process graph may be generated, based on the main task, whose graph vertices are task objects.

The scheduler/task management unit then takes the main task object and executes the splitter/joiner part to create smaller tasks. Smaller tasks can be moved to another task management unit and the splitting/joining process repeated until the subtasks fit on a compute core. The resulting "atomic" tasks cannot be subdivided anymore, but can still be moved/scheduled over all the task management units in the machine (i.e. task scheduling across nodes). Moving tasks to different task management units of the machine (located on same compute node or different compute nodes) may be improve load balancing. Once a task management unit in the machine has accepted an atomic task for execution, it is locally compiled and linked to form a "kernel task" (i.e. kernel plus view definition) and placed in a local execution queue. Next, the task management unit assigns that kernel task to a compute core (which will executing "kernel") and data formatting unit (which will executing "view definition"). Kernel tasks usually cannot be moved to another node anymore.

The data formatting unit executes the view definition, request reads for the needed fragments of the input object to the MOMU, and places the resulting data as views in the scratchpad memory. The compute cores then access the views in the scratchpad memory, perform their mathematical operation(s), and place the output data back into the scratchpad memory. The data formatting units can now access the computed output views from the scratchpad memory and transform them into addresses inside the memory objects, which may be an output memory object. Thereafter, the data formatting units send out write requests to the MOMU for those objects. After the MOMU and distribute store have confirmed the storage of the (output) memory objects, the data formatting unit notifies the respective task management unit that the kernel task is finished. If any other task is waiting in the queue, the task management unit schedules the next kernel task.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. Any reference signs in the claims should not be construed as limiting the scope.

## Claims

1. A compute node (400) for a multi-node multiprocessing computer comprising a distributed store (440) as physical main memory, the compute node comprising:
at least one compute core (410) for performing compute processes on information organized and stored in memory objects (10), the at least one compute core being configured to reference said information as one or more fragments (12) contained within said memory objects, different fragments of each memory object having different offsets in a logical address space (11) associated with the memory object and each memory object being assigned a unique identifier (OID), and
a memory object management unit (420) operatively coupling the at least one compute core (410a-d) to the distributed store (440) to access memory object fragments from respective memory locations in the distributed store, each memory location in the distributed store being accessible through a corresponding physical address,
wherein the memory object management unit (420) is configured to calculate the physical address corresponding to the memory location in the distributed store of each fragment referenced by the at least one compute core as a function of the fragment's offset in the logical address space associated with and the unique identifier assigned to the memory object containing said fragment.

2. The compute node (400) according to claim 1, further comprising one or multiple memory modules (424; 425) as respective store units of the distributed store (440).

3. The compute node (400) according to any one of the preceding claims, wherein the physical addresses calculated by the memory object management unit (420) with respect to the different fragments of each one of the memory objects are distributed randomly and uniformly across a physical address space of the distributed store.

4. The compute node (400) according to any one of the preceding claims, wherein the at least one compute core (410) and the memory object management unit (420) are connectible to a communication network (427; 437) via respective network interfaces (431) and accessible on the communication network via respective network addresses.

5. The compute node (400) according to any one of the preceding claims, further comprising a data formatting unit (412) configured to prepare memory object fragments for future use by the at least one compute core (410).

6. The compute node (400) according to any one of the preceding claims, further comprising a node-local cache memory (415; 416) configured to temporarily store prefetched memory object fragments and/or outputs from the at least one compute core to be stored as memory object fragments.

7. The compute node (400) according to claim 5 and 6, further comprising a task management unit (411) configured to assign tasks for parallel pipelined execution by the at least one compute core (410), the data formatting unit (412) and the memory object management unit (420) as stages of a pipeline.

8. The compute node (400) according to any one of the preceding claims, wherein the memory object management unit (420) is configured to calculate at least one physical address of each fragment referenced by the at least one compute core (410) by application of at least one hash function to the combined unique identifier and fragment offset.

9. A multiprocessing computer (600) comprising a plurality of compute nodes (610) according to any one of claims 1 to 8, a distributed store for memory objects composed of a plurality of store units (641), and a communication network (637) operatively connecting each of the plurality of compute nodes to each of the plurality of store units, wherein at least a portion of the plurality of store units are comprised by the compute nodes and a unique network address is assigned to each store unit.

10. The computer (600) according to claim 9, wherein all of the plurality of store units is comprised by the compute nodes, each compute node comprising at least one store unit of the distributed store for memory objects

11. The computer (600) according any one of claim 9 or 10, wherein a unique node identifier is assigned to each one of the plurality of compute nodes and the memory object management units are configured to generate the unique identifiers for the memory objects upon request, based on a timestamp and the node identifier of the respective compute node.

12. The computer (600) according to any one of claims 9 to 11, wherein a portion of each physical address coincides with the network address of one of the store units.

13. Use of the computer (600) according to any one of claims 9 to 12 in high-performance computing.

14. A memory access method (800) for a multi-node multiprocessing computer (600) comprising a distributed store as main memory, the method comprising:
organizing (801) information accessible in the distributed store into memory objects (10) as storage format,
assigning (802) a unique identifier (OID) to each memory object (10) and subdividing each memory object into a plurality of fragments (12) such that different fragments of the memory object have different offsets in a logical address space (11) associated with the memory object, whereby the information accessible in the distributed store corresponds to fragments of memory objects,
determining (803) the unique identifiers (OID) of the memory objects respectively containing fragments referenced by one or multiple compute cores of the computer,
determining (804) the respective offsets for the fragments referenced by said one or multiple compute cores,
for each fragment referenced by said one or multiple compute cores, calculating (805) a physical address of a memory location in the distributed store as a function of the fragment offset and the unique identifier of the memory object corresponding to the fragment,
accessing (806) the fragments referenced by said one or multiple compute cores from the respective memory locations in the distributed store through the corresponding physical addresses.

15. The method (800) according to claim 14, wherein the distributed store comprises a plurality of store units, the method further comprising:
distributing the fragments of each memory object accessible in the distributed store over the plurality of store units by calculating the physical addresses of the respective memory locations in the distributed store according to a random uniformly distributed function.
